# EUROPEAN PATENT APPLICATION

(11) **EP 2 528 407 A1**
(43) Date of publication of application: **28.11.2012**
(21) Application number: 10847253.1
(22) Date of filing: 13.08.2010
(51) Int. Cl.: H04W 80/10

(54) **MEDIA FLOW CONTROL METHOD AND DEVICE IN COLLABORATIVE SESSION**

(71) Applicant: Huawei Technologies Co., Ltd., Shenzhen, Guangdong 518129 (CN)
(72) Inventor: YANG, Lili, Shenzhen Guangdong 518129 (CN); MAYER, Georg, Shenzhen Guangdong 518129 (CN)
(74) Representative: Kreuz, Georg Maria
(86) International application number: PCT/CN2010/076005
(87) International publication number: WO 2011/109995

(57) **Abstract**

The present invention discloses a media stream control method and device in a collaborative session, and belongs to the multimedia field. The method includes: receiving a request that carries media stream replication information and is sent by a controller user equipment (UE) or a controllee UE, where the media stream replication information includes at least a media stream replication method and a media stream replication mode; and controlling, according to the media stream replication information, replication of media stream on the controller UE to the controllee UE. The media stream control device in a collaborative session includes a receiving module and a controlling module. With the present invention, the media stream replication information is received, and according to the media stream replication information, the media stream on the controller UE is controlled to be replicated to the controllee UE, so that replication of the media stream is implemented, thereby improving the service experience.

## Description

### FIELD OF THE INVENTION

The present invention relates to the multimedia field, and in particular, to a media stream control method and device in a collaborative session.

### BACKGROUND OF THE INVENTION

In the SIP (Session Initiation Protocol, Session Initiation Protocol) protocol, a multimedia session is formed by a group of multimedia senders and receivers and the data stream between the senders and the receivers. In a collaborative session scenario of an IMS (IP Multimedia Subsystem, IP multimedia subsystem), there are two or more UEs (User Equipment, user equipment) at the local end. A UE that initiates control operations, such as transferring, adding, and modifying media, is called a controller UE, and other UEs are called controllee UEs. When a multimedia session is described, an application layer protocol, SDP (Session Description Protocol, Session Description Protocol) over SIP is used.

In a collaborative session, the controller UE may initiate IUT (Inter-UE Transfer, inter-UE transfer) operations, such as transferring, adding, or modifying media, to the controllee UE, and the media stream in the collaborative session is established on each UE of the collaborative session.

The prior art has the following disadvantages:

In the prior art, when the media stream in the collaborative session is controlled, the media stream is established on each UE of the current session, which results in limited service experience.

### SUMMARY OF THE INVENTION

To implement replication of media stream and improve the service experience, the present invention provides a media stream control method and device in a collaborative session. The technical solutions are as follows:
In one aspect, a media stream control method in a collaborative session is provided and includes:
   receiving a request that carries media stream replication information and is sent by a controller user equipment UE or a controllee UE, where the media stream replication information includes at least a media stream replication method and a media stream replication mode; and
   controlling, according to the media stream replication information, replication of the media stream on the controller UE to the controllee UE.
In another aspect, a media stream control device in a collaborative session is provided and includes:
   a receiving module, configured to receive a request that carries media stream replication information and is sent by a controller user equipment UE or a controllee UE, where the media stream replication information includes at least a media stream replication method and a media stream replication mode; and
   a controlling module, configured to control replication of the media stream on the controller UE to the controllee UE according to the media stream replication information received by the receiving module.
The technical solutions of the present invention bring the following benefits:
   The media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

### BRIEF DESCRIPTION OF THE DRAWINGS

To make the technical solutions of the embodiments of the present invention clearer, the accompanying drawings used in the description of the embodiments are briefly described hereunder. Evidently, the accompanying drawings illustrate only some embodiments of the present invention.
FIG. 1 is a flowchart of a media stream control method in a collaborative session according to a first embodiment of the present invention;
FIG. 2 is a flowchart of a media stream control method in a collaborative session according to a second embodiment of the present invention;
FIG. 3 is a flowchart of a media stream control method in a collaborative session according to a third embodiment of the present invention;
FIG. 4 is a flowchart of a media stream control method in a collaborative session according to a fourth embodiment of the present invention;
FIG. 5 is a flowchart of a media stream control method in a collaborative session according to a fifth embodiment of the present invention; and
FIG. 6 is a schematic structural diagram of a media stream control device in a collaborative session according to a sixth embodiment of the present invention.

### DETAILED DESCRIPTION OF THE EMBODIMENTS

To make the purpose, technical solutions, and advantages of the present invention clearer, the embodiments of the present invention are hereinafter described in detail with reference to the accompanying drawings.

### Embodiment 1

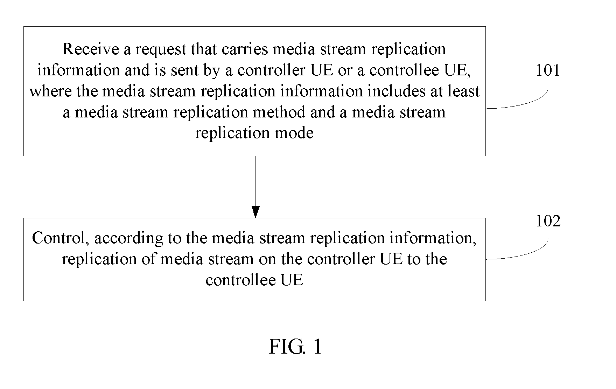

Referring to FIG. 1, this embodiment provides a media stream control method in a collaborative session, and the method procedure specifically includes the following steps:
101. Receive a request that carries media stream replication information and is sent by a controller user equipment (UE) or a controllee UE, where the media stream replication information includes at least a media stream replication method and a media stream replication mode.
102. Control replication of the media stream on the controller UE to the controllee UE.

A device that implements the method provided in this embodiment is a media stream control device in a collaborative session. This embodiment does not impose specific limitation on the media stream control device in a collaborative session, and the device may be preferentially an SCC AS (Service Centralized and Continuity AS, service centralized and continuity AS).

With the method provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

### Embodiment 2

This embodiment provides a media stream control method in a collaborative session. In this method, media stream replication information is added by the means of extending the "a=" attribute in the SDP protocol, and the replication of the media stream in the collaborative session is controlled. The extended "a=" attribute in the SDP protocol is defined as follows:
a=3gpp.iut.replication : <method> <direction> <side> <receiver-address> <authorization-action>
<method> is a media stream replication method. This embodiment defines two network-based or device-based replication methods:
   when <method> = nw, it indicates that the media stream replication method is a network-based replication method;
   when <method> = ue, it indicates that the media stream replication method is a device-based replication method.
<direction> is a media stream replication mode. This embodiment defines two replication modes: pull and push:
when <direction> = pull, it indicates that the media stream replication mode is a pull mode;
when <direction> = push, it indicates that the media stream replication mode is a push mode.
<side> is an identity of a media stream related device. This embodiment defines three types of identities: receiver, replicator, and controller:
   when <side> = receiver, it indicates that the identity of the media stream related device is a media stream receiver;
   when <side> = replicator, it indicates the identity of the media stream related device is a media stream replicator;
   when <side> = controller, it indicates the identity of the media stream related device is a media stream controller.
<receiver-address> is the address of a media stream receiver
   when <receiver-address> =IP address of replicated-to UE, it indicates the address of the media stream receiver.
<authorization-action> is the authorization identifier of a media stream. This embodiment defines three types of identifiers: authorize, authorized, and not-authorized.
   when <authorization-action> = authorize, it indicates "authorize", indicating that the related replication of the media stream needs to be authorized by the controller UE;
   when <authorization-action> = authorized, it indicates "authorized";
   when <authorization-action> = not-authorized, it indicates "not-authorized".

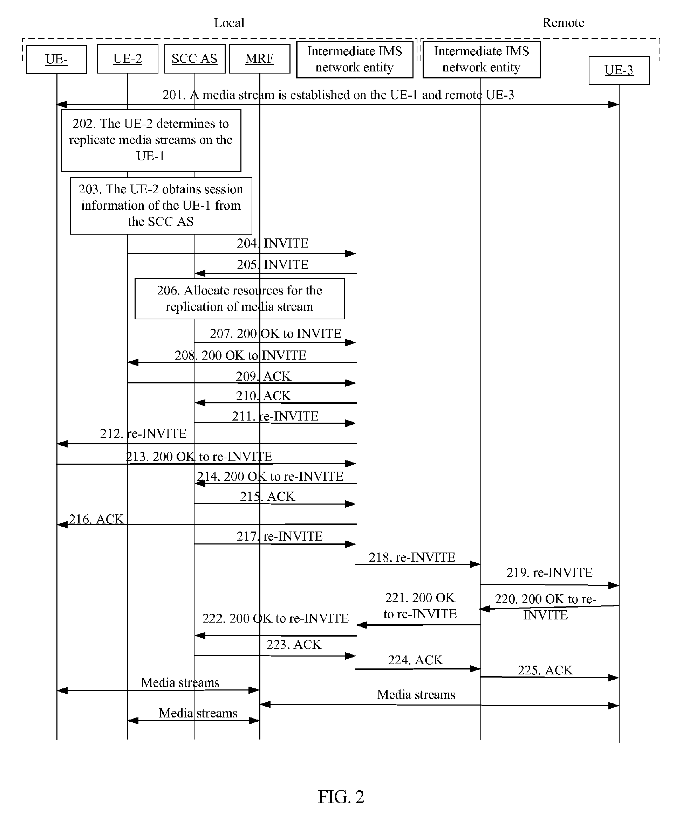

In combination with the defined "a=" attribute in the SDP protocol, the method provided in this embodiment is described in detail based on the following example: In a collaborative session, a media stream control device is an SCC AS, a controller UE is a UE-1, a controllee UE is a UE-2, a replication mode is a PULL mode, and a replication method is a network-based media stream replication method. Referring to FIG. 2, the procedure of the method provided in this embodiment is specifically as follows:
201. A session exists between a controller UE (UE-1) and a remote UE and is anchored on an SCC AS, and a media stream is established between the UE-1 and the remote UE (UE-3).
202. A controllee UE (UE-2) determines to replicate the media stream on the UE-1.
203. The UE-2 obtains related session information of the UE-1 from a corresponding SCC AS.

The related session information includes information of the media stream established on the UE-1.
204-205. The UE-2 sends a SIP INVITE request to the SCC AS to execute a media stream replication operation.

Specifically, the SIP INVITE request content is shown in the following Table 1:

**Table 1**

| |
|---|
| INVITE sip:sccas@home1.net; SIP/2.0 |
| Via:SIP/2.0/UDP [5555::aaa:bbb:ccc:eee]:1357;comp=sigcomp; |
| branch=z9hG4bKnashds7dfdsdq |
| Max-Forwards: 70 |
| P-Preferred-Identity: <sip:user2@homel.net> |
| From: <sip:user2@home1.net>;tag=171828 |
| To: <sip:sccas@home1.net> |
| Call-ID: Asdasd23123366 |
| Cseq: 41277 INVITE |
| Contact: <sip:user2@homel.net;gr=urn:uuid:f81d4fae-7dec-11d0-2222-222222222222> |
| Allow: INVITE, ACK, CANCEL, BYE, PRACK, UPDATE, REFER, MESSAGE |
| Content-Type: application/sdp |
| Content-Length: (...) |
| |
| v=0 |
| o=- 2987933615 2987933615 IN IP6 4444::aaa:bbb:ccc:eee |
| s=- |
| c=IN IP6 4444::aaa:bbb:ccc:eee |
| t=0 0 |
| m=audio 4444 RTP/AVP 97 |
| a=rtpmap:97 PCMU/8000 |
| m=video 6666 RTP/AVP 98 |
| a=rtpmap:98 MPV/90000 |
| **a=3gpp.iut.replication:nw pull receiver** |

As shown in the above Table 1, the media stream replication information that is located in the extended "a=" attribute in the SDP protocol and that is in the SIP INVITE request includes but is not limited to the following: The media stream replication method is a network-based replication method, the replication mode is a pull mode, and the identity of the media stream related device is a media stream receiver.
206. The SCC-AS interacts with an MRF (Media Resource Function, media resource function) according to the media stream information in the SIP INVITE request to allocate resources for the replication of the media.
207-208. The SCC AS returns a 200 OK response to the UE-2.
209-210. The UE-2 sends a SIP ACK request to the SCC AS.
211-212. The SCC AS sends a SIP re-INVITE request to the UE-1.

The SIP re-INVITE request sent by the SCC AS to the UE-1 is used to refresh the media stream on the controller UE and instruct the controller UE to replicate media information, so that the controller UE authorizes the UE-2 and confirms whether the UE-2 can replicate the media stream. The content of the SIP re-INVITE request is shown in the following Table 2:

**Table 2**

| |
|---|
| INVITE sip:userl@home1.net; SIP/2.0 |
| Via: SIP/2.0/UDP |
| Max-Forwards: |
| P-Preferred-Identity: |
| From: <sip:SCCas@home1.net>;tag=171828 |
| To: <sip:user1@home1.net>; tag=297786 |
| Call-ID: |
| Cseq: 41278 INVITE |
| Contact: |
| Allow: INVITE, ACK, CANCEL, BYE, PRACK, UPDATE, REFER, MESSAGE |
| Content-Type: application/sdp |
| Content-Length: (...) |
| |
| v=0 |
| o=- 2987933615 2987933615 IN IP6 4444::aaa:bbb:ccc:fff |
| s=- |
| c=IN IP6 4444::aaa:bbb:ccc:fff |
| t=0 0 |
| m=audio 4444 RTP/AVP 97 |
| a=rtpmap:97 PCMU/8000 |
| m=video 6666 RTP/AVP 98 |
| a=rtpmap:98 MPV/90000 |
| **a=3gpp.iut.replication nw pull replicator 4444::aaa:bbb:ccc:eee authorized** |

As shown in the above Table 2, the media stream replication information that is located in the extended "a=" attribute in the SDP protocol and that is in the SIP re-INVITE request includes but is not limited to the following: The media stream replication method is a network-based replication method, the replication mode is a pull mode, the identity of the media stream related device is a media stream receiver, and the address of a UE that receives the media stream is 4444::aaa:bbb:ccc:eee. In addition, the SIP re-INVITE request requires the UE-1 to authorize the UE that receives the media stream.
213-214. The UE-1 returns a SIP 200 OK response to the SCC AS.

The specific content of the SIP 200 OK response is shown in the following Table 3:

**Table 3**

| |
|---|
| SIP/2.0 200 OK |
| Via: |
| Max-Forwards: |
| P-Preferred-Identity: |
| From: <sip:SCCas@home1.net>;tag=171828 |
| To: <sip:user1@home1.net>; tag=297786 |
| Call-ID: |
| Cseq: |
| Contact: |
| Allow: INVITE, ACK, CANCEL, BYE, PRACK, UPDATE, REFER, MESSAGE |
| Content-Type: application/sdp |
| Content-Length: (...) |
| |
| v=0 |
| o=- 2987933615 2987933615 IN IP6 4444::aaa:bbb:ccc:fff |
| s=- |
| c=IN IP6 4444::aaa:bbb:ccc:fff |
| t=0 0 |
| m=audio 4444 RTP/AVP 97 |
| a=rtpmap:97 PCMU/8000 |
| m=video 6666 RTP/AVP 98 |
| a=rtpmap:98 MPV/90000 |
| **a=3gpp.iut.replication nw pull controller 4444::aaa:bbb:ccc:eee authorized** |

As shown in the above Table 3, because the "a=" attribute in the SDP protocol carries an authorized authorization identifier, it indicates that the UE-1 already authorizes the UE-2 and the authorization succeeds, so as to indicate that the UE-2 can replicate the media stream.
215-216. The SCC AS returns a SIP ACK request to the UE-1.
217-219. The SCC AS sends a SIP re-INVITE request to a remote UE UE-3 to refresh the media stream on the remote UE-3.
220-222. The UE-3 returns a SIP 200 OK response to the SCC AS in response to the re-INVITE request.
223-225. The SCC AS returns a SIP ACK request to the UE-3.

So far, the whole procedure of media stream replication is ended, and the media stream on the UE-1 is successfully replicated to the UE-2.

With the method provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved. In addition, an authorization identifier is added to the media stream replication information, so that the controller UE can authorize the controllee UE, thereby guaranteeing session security.

### Embodiment 3

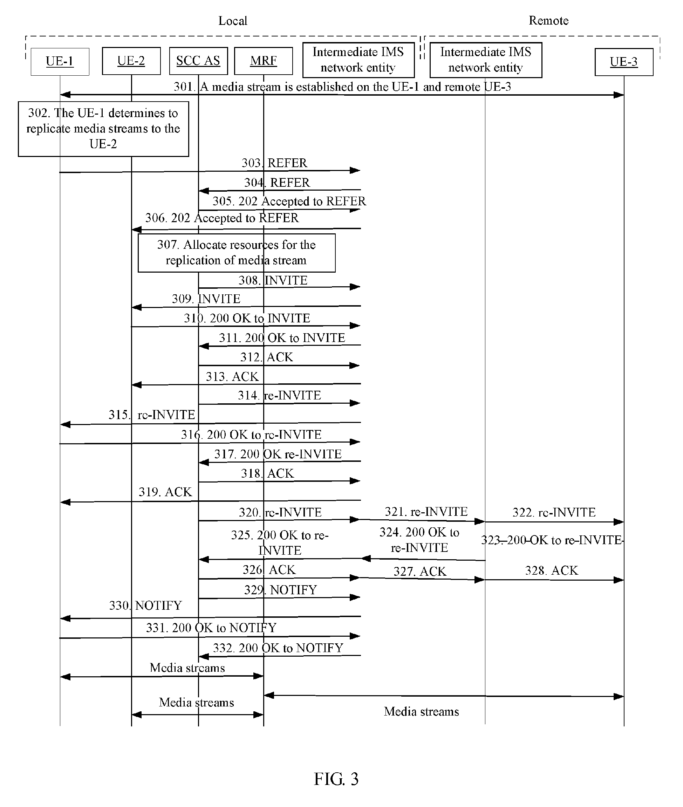

This embodiment provides a media stream control method in a collaborative session. In this method, media stream replication information is also added by the means of extending the "a=" attribute in the SDP protocol, and the replication of the media stream in the collaborative session is controlled. The definition of the extended "a=" attribute in the SDP protocol is the same as that in the second embodiment, and this embodiment is also described by taking the following example: In a collaborative session, a media stream control device is an SCC AS, a controller UE is a UE-1, and a controllee UE is a UE-2. Different from the above second embodiment, this embodiment is described by taking a network-based media stream replication method in PUSH mode as an example. Referring to FIG. 3, the procedure of the method provided in this embodiment is specifically as follows:
301. A session exists between a controller UE (UE-1) and a remote UE-3 and is anchored on an SCC AS, and a media stream is established between the UE-1 and the remote UE-3.
302. The UE-1 determines to replicate the media stream to the UE-2.
303-304. The UE-1 sends a SIP REFER request to the SCC AS.

The content of the SIP REFER request is shown in the following Table 4:

**Table 4**

| |
|---|
| REFER sip:interUEtransfer@sccas1.home1.net SIP/2.0 |
| Via: |
| To: sip:user2_public1@home2.net; |
| From: sip:user1_public1@home1.net;tag=24680 |
| Call-ID: cb03a0s09a2sdfg1kj490333 |
| CSeq: 93809824 REFER |
| Max-Forwards: 70 |
| P-Preferred-Identity: |
| Refer-To: |
| <sip:user3_public1@home1.net;gr=urn:uuid:f81d4fae-7dec-11d0-a765-00a0c91e6bf6?body= m%3Dvedio%209%20RTP%2FAVP%98%0Dm% **a=3gpp.iut.replication nw push controller 4444::aaa:bbb:ccc:eee >** |
| Require: target-dialog |
| Target-dialog: cb03a0s09a2sdfgkj321576;remote-tag=abcdef;local-tag=123456 |
| Contact:<sip:user2_public1@home2.net; |
| gr=um:uuid:f81d4fae-7dec-11d0-a765-00a0c91ewxyz>;+g.3gpp.iut-controller |
| Referred-By: sip:user1_public1@home1.net |
| Accept: application/sdp, message/sipfrag |
| Content-Length: 0 |

As shown in the above Table 4, the media stream replication information that is located in the extended "a=" attribute in the SDP protocol and that is in the SIP REFER request includes but is not limited to the following: A media stream replication method is a network-based replication method, a replication mode is a push mode, an identity of a media stream related device is a media stream controller, and an address of a UE that receives the media stream is 4444::aaa:bbb:ccc:eee.
305-306. The SCC AS returns a SIP 202 Accepted message to the UE-1 in response to the SIP REFER request.
307. The SCC-AS interacts with an MRF according to the media stream replication information carried in the SIP REFER request, to allocate resources for the replication of the media.
308-309. The SCC AS sends a SIP INVITE request to the UE-2 according to the information in the received SIP REFER request.

The SIP INVITE request sent by the SCC AS to the UE-2 is used to establish the replicated media stream, and the specific content is shown in the following Table 5:

**Table 5**

| |
|---|
| INVITE sip:user2@home1.net;gr=urn:uuid:f81d4fae-7dec-11d0-2222-222222222222 SIP/2.0 |
| Via: SIP/2.0/UDP |
| Max-Forwards: 70 |
| From: <sip:user1@home1.net>;tag=171828 |
| To: <sip:user2@home1.net;gr=urn:uuid:f81d4fae-7dec-11d0-2222-222222222222> |
| Referred-By: sip: userl@example1.net |
| Call-ID: duie4hr3896 |
| Cseq: 41 INVITE- |
| Contact: <sip:user1@home1.net;gr=urn:uuid:f81d4fae-7dec-11d0-1111-111111111111> |
| Allow: INVITE, ACK, CANCEL, BYE, PRACK, UPDATE, REFER, MESSAGE |
| Content-Length: 0 |
| Content-Type: application/sdp |
| Content-Length: (...) |
| |
| v=0 |
| o=- 2987933615 2987933615 IN IP6 4444::aaa:bbb:ccc:fff |
| s=- |
| c=IN IP6 4444::aaa:bbb:ccc:fff |
| t=0 0 |
| m=audio 4444 RTP/AVP 97 |
| a=rtpmap:97 PCMU/8000 |
| m=video 6666 RTP/AVP 98 |
| a=rtpmap:98 MPV/90000 |
| **a=g.3gpp.iut.replication nw push** replicator |

As shown in the above Table 5, the media stream replication information that is located in the extended "a=" attribute in the SDP protocol and that is in the SIP INVITE request includes but is not limited to the following: The media stream replication method is a network-based replication method, the replication mode is a push mode, and the identity of the media stream related device is a media stream receiver.
310-311. The UE-2 returns a SIP 200 OK response to the SCC AS.
312-313. The SCC AS returns a SIP ACK request to the UE-2.
314-315. The SCC AS sends a SIP re-INVITE request to the UE-1 to refresh the media stream on the UE-1.
316-317. The UE-1 returns a SIP 200 OK response to the SCC AS.
318-319. The SCC AS returns a SIP ACK request to the UE-1.
320-322. The SCC AS sends a SIP re-INVITE request to the UE-3 to refresh the media stream on the remote UE-3.
323-325. The UE-3 returns a SIP 200 OK response to the SCC AS.
326-327. The SCC AS returns a SIP ACK request to the UE-3.
329-330. The SCC AS sends a SIP NOTIFY request to the UE-1, to notify the UE-1 that the media replication triggered by the SIP REFER request succeeds.
331-332. The UE-1 returns a SIP 200 OK response to the SCC AS.

So far, the media stream replication procedure in push mode is ended, and the media stream on the UE-1 is successfully replicated to the UE-2.

With the method provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

### Embodiment 4

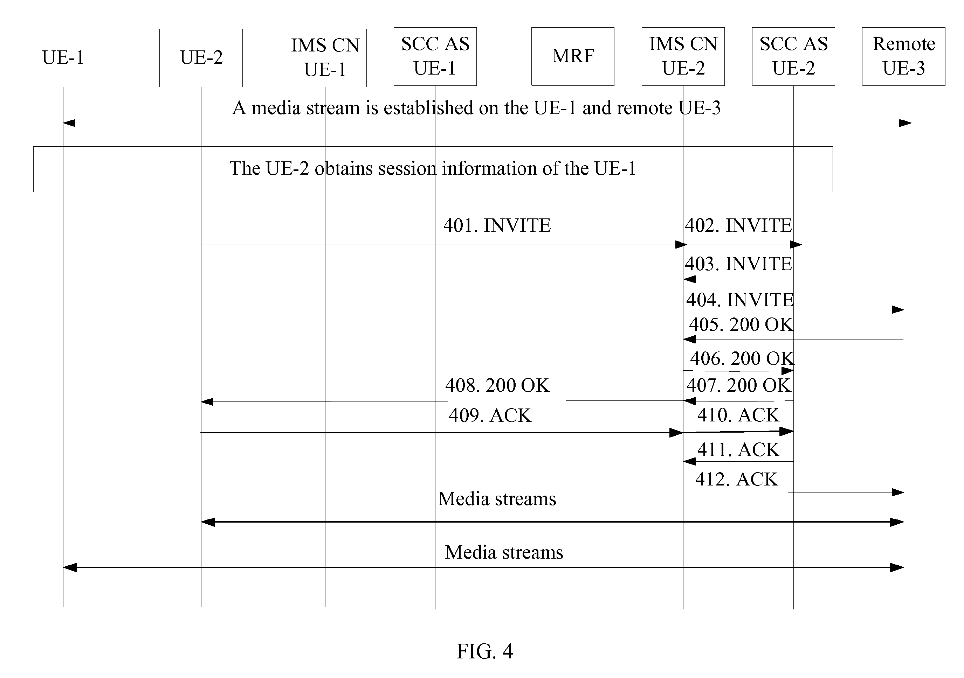

This embodiment provides a media stream control method in a collaborative session. In this method, media stream replication information is also added by the means of extending the "a=" attribute in the SDP protocol, and the replication of the media stream in the collaborative session is controlled. The definition of the extended "a=" attribute in the SDP protocol is the same as that in the second embodiment, and this embodiment is also described by taking the following example: In a collaborative session, a media stream control device is an SCC AS, a controller UE is a UE-1, and a controllee UE is a UE-2. Different from the above second embodiment, this embodiment is described by taking a device-based media stream replication method in PULL mode as an example. Referring to FIG. 4, the procedure of the method provided in this embodiment is specifically as follows:
401-404. The UE-2 sends a SIP INVITE request to a remote UE to request replicating the media stream on the remote UE.

The content of the SIP INVITE request is shown in the following Table 6:

**Table 6**

| |
|---|
| INVITE |
| sip:user3_ublic3@home3.net;gr=urn:uuid:f81d4fae-17oct-11a1-a678-0054c91eabcd SIP/2.0 |
| Via: |
| Record-Route: sip:scc-as@home2.net |
| To: sip:user3_public3@home3.net; |
| From: sip:user2_public1@home2.net;tag=acegi |
| Call-ID: |
| CSeq: |
| Max-Forwards: |
| P-Asserted-Identity: "remote user" sip:user2_public1@home2.net |
| Contact: |
| sip:user2_public1@home2.net;gr=urn:uuid:f81d4fae-7dec-11d0-a765-00a0c91e6bf6 |
| Allow: |
| Content-Type: application/sdp |
| Content-Length: (...) |
| |
| v=0 |
| o=- 1027933615 1027933615 IN IP4 123.112.67.87 |
| s=- |
| t=0 0 |
| m=audio 1456 RTP/AVP 96 0 |
| c=IN IP4 123.112.67.87 |
| **a=3gpp.iut.replication ue pull receiver** |

As shown in the above Table 6, the media stream replication information that is located in the extended "a=" attribute in the SDP protocol and that is in the SIP INVITE request includes but is not limited to the following: a media stream replication method is a device-based replication method, a replication mode is a pull mode, and an identity of a media stream related device is a media stream receiver.
405-408. The remote UE returns a SIP 200 OK response to the UE-2.

The content of the SIP 200 OK response is shown in the following Table 7:

**Table 7**

| |
|---|
| SIP/2.0 200 OK |
| Via: |
| To: |
| From: |
| Call-ID: |
| CSeq: |
| P-Asserted-Identity: |
| Contact: |
| sip:user3_public3@home3.net;gr=urn:uuid:f81d4fae-17oct-11a1-a678-0054c91eabcd |
| Allow: |
| Content-Type: application/sdp |
| Content-Length: (...) |
| |
| v=0 |
| o=- 1027933615 1027933615 IN IP4 132.54.76.98 |
| s=- |
| t=0 0 |
| m=audio 1300 RTP/AVP 96 97 |
| c=IN IP4 132.54.76.98 |
| **a=3gpp.iut.replication ue pull replicator** |

As shown in the above Table 7, the media stream replication information that is located in the extended "a=" attribute in the SDP protocol and that is in the SIP INVITE request includes but is not limited to the following: The media stream replication method is a device-based replication method, the replication mode is a pull mode, and the identity of the media stream related device is a media stream replicator.
409-412. The UE-2 returns a SIP ACK request to the remote UE.

So far, the media stream on the remote UE is successfully replicated to the UE-2.

With the method provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

### Embodiment 5

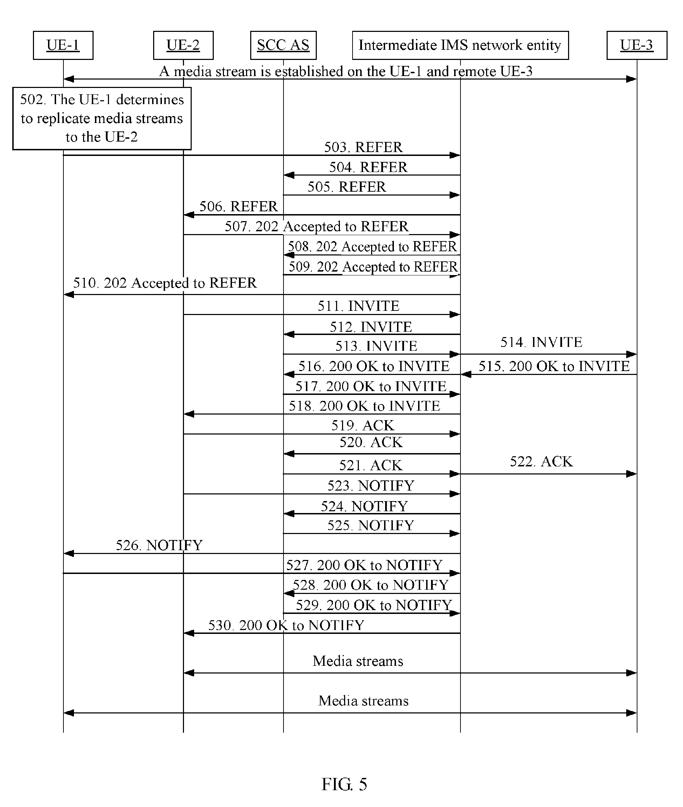

This embodiment provides a media stream control method in a collaborative session. In this method, media stream replication information is also added by the means of extending the "a=" attribute in the SDP protocol, and the replication of the media stream in the collaborative session is controlled. The definition of the extended "a=" attribute in the SDP protocol is the same as that in the second embodiment, and this embodiment is also described by taking the following example: In a collaborative session, a media stream control device is an SCC AS, a controller UE is a UE-1, and a controllee UE is a UE-2. Different from the above second embodiment, this embodiment is described by taking a device-based media stream replication method in PUSH mode as an example. Referring to FIG. 5, the procedure of the method provided in this embodiment is specifically as follows:
501. A session exists between a controller UE (UE-1) and a remote UE-3 and is anchored on an SCC AS, and a media stream is established between the UE-1 and the remote UE-3.
502. The UE-1 determines to replicate the media stream to the UE-2.
503-506. The UE-1 sends a SIP REFER request to the UE-2.

The content of the SIP REFER request is shown in the following Table 8:

**Table 8**

| |
|---|
| REFER sip:interUEtransfer@sccas1.home1.net SIP/2.0 |
| Via: |
| To: sip:user2_publicl@home2.net; |
| From: sip:user1_public1@home1.net;tag=24680 |
| Call-ID: cb03a0s09a2sdfglkj490333 |
| CSeq: 93809824 REFER |
| Max-Forwards: 70 |
| P-Preferred-Identity: |
| Refer-To: |
| <sip:user3_public1@home1.net;gr=urn:uuid:f81d4fae-7dec-11d0-a765-00a0c91e6bf6?body= m%3Dvedio%209%20RTP%2FAVP%98%0Dm% **a=3gpp.iut.replication ue push controller 4444::aaa:bbb:ccc:eee** > |
| Require: target-dialog |
| Target-dialog: cb03a0s09a2sdfgkj321576;remote-tag=abcdef;local-tag=123456 |
| Contact:<sip:user2_public1@home2.net; |
| gr=um:uuid:f81d4fae-7dec-11d0-a765-00a0c91ewxyz>;+g.3gpp.iut-controller |
| Referred-By: sip:user1_public1@home1.net |
| Accept: application/sdp, message/sipfrag |
| Content-Length: 0 |

As shown in the above Table 8, the media stream replication information that is located in the extended "a=" attribute in the SDP protocol and that is in the SIP REFER request includes but is not limited to the following: A media stream replication method is a device-based replication method, a replication mode is a push mode, an identity of a media stream related device is a media stream controller, and an address of a UE that receives the media stream is 4444::aaa:bbb:ccc:eee.
507-510. The UE-2 returns a SIP 202 Accepted message to the UE-1 in response to the SIP REFER request.
511-514. The UE-2 sends a SIP REFER request to the UE-3.

The SIP INVITE request sent by the UE-2 to the UE-3 is used to establish the replicated media stream, and the specific content is shown in the following Table 9:

**Table 9**

| |
|---|
| INVITE sip:user2@home1.net;gr=urn:uuid:f81d4fae-7dec-11d0-2222-222222222222 SIP/2.0 |
| Via: SIP/2.0/UDP |
| Max-Forwards: 70 |
| From: <sip:user1@home1.net>;tag=171828 |
| To: <sip:user2@home1.net;gr=urn:uuid:t81d4fae-7dec-11d0-2222-222222222222> |
| Referred-By: sip: userl@example1.net |
| Call-ID: duie4hr3896 |
| Cseq: 41 INVITE- |
| Contact: <sip:user1@home1.net;gr=urn:uuid:f81d4fae-7dec-11d0-1111-111111111111> |
| Allow: INVITE, ACK, CANCEL, BYE, PRACK, UPDATE, REFER, MESSAGE |
| Content-Length: 0 |
| Content-Type: application/sdp |
| Content-Length: (...) |
| |
| v=0 |
| o=- 2987933615 2987933615 IN IP6 4444::aaa:bbb:ccc:fff |
| s=- |
| c=IN IP6 4444::aaa:bbb:ccc:fff |
| t=0 0 |
| m=audio 4444 RTP/AVP 97 |
| a=rtpmap:97 PCMU/8000 |
| m=video 6666 RTP/AVP 98 |
| a=rtpmap:98 MPV/90000 |
| **a=g.3gpp.iut.replication ue push receiver** |

As shown in the above Table 9, the media stream replication information that is located in the extended "a=" attribute in the SDP protocol and that is in the SIP INVITE request includes but is not limited to the following: The media stream replication method is a device-based replication method, the replication mode is a push mode, and the identity of the media stream related device is a media stream receiver.
515-518. The UE-3 returns a SIP 200 OK response to the UE-2.
519-522. The UE-2 returns a SIP ACK request to the UE-3.
523-526. The UE-2 sends a media stream refresh notification to the UE-1.
527-530. The UE-1 returns a 200 OK response to the UE-2.

So far, the media stream replication procedure in push mode is ended, and the media stream on the UE-1 is successfully replicated to the UE-2.

With the method provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

### Embodiment 6

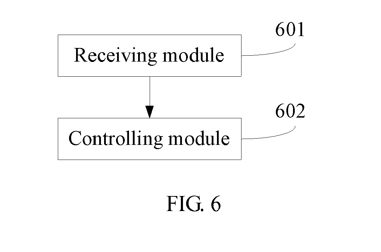

Referring to FIG. 6, the embodiment provides a media stream control device in a collaborative session, and the device includes:
a receiving module 601, configured to receive a request that carries media stream replication information and is sent by a controller UE or a controllee UE, where the media stream replication information includes at least a media stream replication method and a media stream replication mode; and
a controlling module 602, configured to control replication of the media stream on the controller UE to the controllee UE according to the media stream replication information received by the receiving module 601.

The media stream replication information carried in the request received by the receiving module 601 is defined in "a=" attribute in a Session Description Protocol (SDP).

The media stream replication information carried in the request received by the receiving module 601 further includes at least one piece of the following information: an identity of a media stream related device, an address of a media stream receiver, and an authorization identifier.

The request received by the receiving module 601 includes a Session Initiation Protocol (SIP) session establishment request or a SIP session transfer request.

For a network-based media stream replication method in pull mode:
the receiving module 601 is specifically configured to receive the request that carries the media stream replication information and is sent by the controllee UE, where in the media stream replication information, the media stream replication method is a network-based media stream replication method, the media stream replication mode is a pull mode, the identity of the media stream related device is a media stream receiver, the address of the media stream receiver is included, and the authorization identifier is authorize; and
accordingly, the controlling module 602 is specifically configured to interact with a media resource entity according to the media stream replication information received by the receiving module 601, where the media resource entity allocates media stream resources on a media stream replicating device to the controllee UE; and return a SIP session establishment response to the controllee UE, where the SIP session establishment response carries media stream resource information.

Further, the controlling module 602 is further configured to send a SIP session modification request to the controller UE, where the SIP session modification request carries the media stream replication information including the address of the media stream receiver and the authorization identifier, so that the controller UE authorizes the controllee UE and refreshes media stream information on the controller UE.

For the network-based media stream replication method in push mode:
the receiving module 601 is specifically configured to receive the request that carries the media stream replication information and is sent by the controller UE, where in the media stream replication information, the media stream replication method is a network-based media stream replication method, the media stream replication mode is a push mode, and the identity of the media stream related device is a media stream controller, and the media stream replication information further includes the address of the media stream receiver; and
accordingly, the controlling module 602 is specifically configured to return a response to the controller UE; interact with a media resource entity according to the media stream replication information received by the receiving module 601, where the media resource entity allocates media stream resources on the controller UE to the controllee UE; and send a SIP session establishment request to the controllee UE, where the SIP session establishment request carries the media stream replication information.

For a device-based media stream replication method in pull mode:
the receiving module 601 is specifically configured to receive the request that carries the media stream replication information and is sent by the controllee UE, where in the media stream replication information, the media stream replication method is a device-based media stream replication method, the media stream replication mode is a pull mode, and the identity of the media stream related device is a media stream receiver; and
accordingly, the controlling module 602 is specifically configured to send, to a remote device, the request that is received by the receiving module 601 and carries the media stream replication information, where the remote device allocates media stream resources used for establishing the media stream; and return a response to the controllee UE, where the response carries the media stream resource information.

For the device-based media stream replication method in push mode:
the receiving module 601 is specifically configured to receive the request that carries the media stream replication information and is sent by the controller UE, where in the media stream replication information, the media stream replication method is a device-based media stream replication method, the media stream replication mode is a push mode, and the identity of the media stream related device is a media stream controller, and the media stream replication information further includes the address of the media stream receiver; and
accordingly, the controlling module 602 is specifically configured to forward the request to the controllee UE, where the request carries the media stream replication information.

The media stream control device in a collaborative session provided in this embodiment may be specifically an SCC AS, which is not limited in this embodiment.

With the media stream control device in a collaborative session provided in this embodiment, the media stream replication information including contents, such as a media stream replication method and a media stream replication mode, is received, and according to the media stream replication information, the media stream on the controller UE is controlled to be replicated to the controllee UE. In this way, replication of the media stream is implemented, and the service experience can be improved.

It should be noted that: when the media stream control device in a collaborative session provided by the above embodiment controls replication of the media stream, the division of the above functional modules is only described as an example; in actual applications, according to requirements, the above functions may be allocated to different functional modules to complete, that is, the internal structure of the device is divided into different functional modules to complete all or part of the above described functions. In addition, the media stream control device in a collaborative session provided by the above embodiment and the embodiment of the media stream control method in a collaborative session belong to the same concept. For the specific implementation process of the device, reference is made to the method embodiments, and details are not further described herein.

The sequence numbers of the above embodiments of the present invention are only for ease of description, and do not denote the preference of the embodiments.

Part of steps of the embodiments of the present invention may be implemented by software, and the corresponding software programs may be stored in a readable storage medium, such as a CD-ROM or a hard disk.

Although the present invention has been described in detail through some exemplary embodiments, the present invention is not limited to such embodiments.

## Claims

1. A media stream control method in a collaborative session, comprising:
receiving a request that carries media stream replication information and is sent by a controller user equipment UE or a controllee UE, wherein the media stream replication information comprises at least a media stream replication method and a media stream replication mode; and
controlling, according to the media stream replication information, replication of media stream on the controller UE to the controllee UE.

2. The method according to claim 1, wherein the media stream replication information is defined in "a=" attribute in a Session Description Protocol SDP.

3. The method according to claim 1, wherein the media stream replication method is one of a network-based replication method and a device-based replication method; and
the media stream replication mode is one of a push mode and a pull mode.

4. The method according to claim 1, wherein the media stream replication information further comprises at least one piece of information of the following: an identity of a media stream related device, an address of a media stream receiver, and an authorization identifier.

5. The method according to claim 4, wherein the identity of the media stream related device is one of a media stream receiver, a media stream replicator, and a media stream controller; and
the authorization identifier is one of authorize, authorized, and not-authorized.

6. The method according to claim 1, wherein the request that carries the media stream replication information comprises: a Session Initiation Protocol SIP session establishment request or a SIP session transfer request.

7. The method according to any one of claims 1 to 6, wherein the receiving the request that carries the media stream replication information and is sent by the controllee UE specifically comprises:
receiving the request that carries the media stream replication information and is sent by the controllee UE, wherein in the media stream replication information, the media stream replication method is a network-based media stream replication method, the media stream replication mode is the pull mode, the identity of the media stream related device is the media stream receiver, the address of the media stream receiver is comprised, and the authorization identifier is authorize; and
accordingly, the controlling, according to the media stream replication information, replication of media stream on the controller UE to the controllee UE specifically comprises:
interacting with a media resource entity according to the media stream replication information, wherein the media resource entity allocates, to the controllee UE, resources used for replicating the media stream; and
returning a Session Initiation Protocol SIP session establishment response to the controllee UE, wherein the SIP session establishment response carries the media stream resource information.

8. The method according to any one of claims 1 to 6, wherein the receiving the request that carries the media stream replication information and is sent by the controller UE specifically comprises:
receiving the request that carries the media stream replication information and is sent by the controller UE, wherein in the media stream replication information, the media stream replication method is a network-based media stream replication method, the media stream replication mode is the push mode, and the identity of the media stream related device is the media stream controller, and the media stream replication information further comprises the address of the media stream receiver; and
accordingly, the controlling, according to the media stream replication information, replication of the media stream on the controller UE to the controllee UE specifically comprises:
returning a response to the controller UE, interacting with a media resource entity according to the media stream replication information, wherein the media resource entity allocates, to the controllee UE, resources used for replicating the media stream; and
sending a Session Initiation Protocol SIP session establishment request to the controllee UE, wherein the SIP session establishment request carries the media stream replication information.

9. The method according to any one of claims 1 to 6, wherein the receiving the request that carries the media stream replication information and is sent by the controllee UE specifically comprises:
receiving the request that carries the media stream replication information and is sent by the controllee UE, wherein in the media stream replication information, the media stream replication method is a device-based media stream replication method, the media stream replication mode is the pull mode, and the identity of the media stream related device is the media stream receiver; and
accordingly, the controlling, according to the media stream replication information, replication of the media stream on the controller UE to the controllee UE specifically comprises:
sending the request carrying the media stream replication information to a remote device, wherein the remote device allocates resources used for establishing the media stream; and
returning a response to the controllee UE, wherein the response carries the media stream resource information.

10. The method according to any one of claims 1 to 6, wherein the receiving the request that carries the media stream replication information and is sent by the controller UE specifically comprises:
receiving the request that carries the media stream replication information and is sent by the controller UE, wherein in the media stream replication information, the media stream replication method is a device-based media stream replication method, the media stream replication mode is the push mode, and the identity of the media stream related device is the media stream controller, and the media stream replication information further comprises the address of the media stream receiver; and
accordingly, the controlling, according to the media stream replication information, replication of the media stream on the controller UE to the controllee UE specifically comprises:
forwarding the request to the controllee UE, wherein the request carries the media stream replication information.

11. The method according to claim 7, after the returning the session establishment response to the controllee UE, the method further comprises:
sending a SIP session modification request to the controller UE, wherein the SIP session modification request carries the media stream replication information comprising the address of the media stream receiver and the authorization identifier, so that the controller UE authorizes the controllee UE and refreshes media stream information on the controller UE.

12. A media stream control device in a collaborative session, wherein the device comprises:
a receiving module, configured to receive a request that carries media stream replication information and is sent by a controller user equipment (UE) or a controllee UE, wherein the media stream replication information comprises at least a media stream replication method and a media stream replication mode; and
a controlling module, configured to control replication of media stream on the controller UE to the controllee UE according to the media stream replication information received by the receiving module.

13. The device according to claim 12, wherein the media stream replication information carried in the request received by the receiving module is defined in "a=" attribute in a Session Description Protocol SDP.

14. The device according to claim 12, wherein the media stream replication information carried in the request received by the receiving module further comprises at least one piece of information of the following: an identity of a media stream related device, an address of a media stream receiver, and an authorization identifier.

15. The device according to claim 12, wherein the request received by the receiving module comprises a Session Initiation Protocol SIP session establishment request or a SIP session transfer request.

16. The device according to any one of claims 12 to 15, wherein the receiving module is specifically configured to receive the request that carries the media stream replication information and is sent by the controllee UE, wherein in the media stream replication information, the media stream replication method is a network-based media stream replication method, the media stream replication mode is a pull mode, the identity of the media stream related device is a media stream receiver, the address of the media stream receiver is comprised, and the authorization identifier is authorize; and
accordingly, the controlling module is specifically configured to: interact with a media resource entity according to the media stream replication information received by the receiving module, wherein the media resource entity allocates media stream resources on the controller UE to the controllee UE; returning a Session Initiation Protocol SIP session establishment response to the controllee UE, wherein the SIP session establishment response carries the media stream resource information.

17. The device according to any one of claims 12 to 15, wherein the receiving module is specifically configured to receive the request that carries the media stream replication information and is sent by the controller UE, wherein in the media stream replication information, the media stream replication method is a network-based media stream replication method, the media stream replication mode is a pull mode, and the identity of the media stream related device is a media stream controller, and the media stream replication information further comprises the address of the media stream receiver; and
accordingly, the controlling module is specifically configured to: return a response to the controller UE; interact with a media resource entity according to the media stream replication information received by the receiving module, wherein the media resource entity allocates media stream resources on the controller UE to the controllee UE; and send a Session Initiation Protocol (SIP) session establishment request to the controllee UE, wherein the SIP session establishment request carries the media stream replication information.

18. The device according to any one of claims 12 to 15, wherein the receiving module is specifically configured to receive the request that carries the media stream replication information and is sent by the controllee UE, wherein in the media stream replication information, the media stream replication method is a device-based media stream replication method, the media stream replication mode is a pull mode, and the identity of the media stream related device is a media stream receiver; and
accordingly, the controlling module is specifically configured to: send the request that is received by the receiving module and carries the media stream replication information to a remote device, wherein the remote device allocates media stream resources used for establishing the media stream; and return a response to the controllee UE, wherein the response carries the media stream resource information.

19. The device according to any one of claims 12 to 15, wherein the receiving module is specifically configured to receive the request that carries the media stream replication information and is sent by the controller UE, wherein in the media stream replication information, the media stream replication method is a device-based media stream replication method, the media stream replication mode is a push mode, and the identity of the media stream related device is a media stream controller, and the media stream replication information further comprises the address of the media stream receiver; and
accordingly, the controlling module is specifically configured to forward a request to the controllee UE, wherein the request carries the media stream replication information.

20. The device according to claim 16, wherein the controlling module is further configured to send a SIP session modification request to the controller UE, wherein the SIP session modification request carries the media stream replication information comprising the address of the media stream receiver and the authorization identifier, so that the controller UE authorizes the controllee UE and refreshes media stream information on the controller UE.
